Europäisches Patentamt

European Patent Office

Office européen des brevets

(19)

(11) Veröffentlichungsnummer: **0 000 861**
**B1**

(12) **EUROPÄISCHE PATENTSCHRIFT**

(45) Veröffentlichungstag der Patentschrift: **12.08.81**

(51) Int. Cl.³: **C 02 F 1/52, C 02 F 3/12**

(21) Anmeldenummer: **78100051.8**

(22) Anmeldetag: **01.06.78**

(54) Verfahren zur Reinigung Calcium enthaltenden, organisch belasteten Abwassers.

(30) Priorität: **25.08.77 DE 2738309**

(43) Veröffentlichungstag der Anmeldung:
**07.03.79 Patentblatt 79/5**

(45) Bekanntmachung des Hinweises auf die Patenterteilung:
**12.08.81 Patentblatt 81/32**

(84) Benannte Vertragsstaaten:
**BE FR GB NL**

(56) Entgegenhaltungen:
FR - A - 2 294 986
NL - A - 148 112
US - A - 3 356 609
US - A - 3 546 111

CHEMICAL ABSTRACTS, vol. 86, no. 14, April 4, 1977
COLUMBUS, Ohio (USA)
H. TEICHMANN et al.: "The biological purification of waste water from sugar refineries" page 383, abstract 95491y

(73) Patentinhaber: **Linde Aktiengesellschaft**
**D-8023 Höllriegelskreuth (DE)**

(72) Erfinder: **Reimann, Hans, Dr.**
**Rudolf-Wilke-Weg 21**
**D-8000 München 71 (DE)**

Courier Press, Leamington Spa, England.

## Verfahren zur Reinigung Calcium enthaltenden, organisch belasteten Abwassers

Die Erfindung betrifft ein Verfahren zur Reinigung Calcium enthaltenden, organisch belasteten Abwassers mittels eines Belebtschlammverfahrens unter Belüften mit nahezu reinem Sauerstoff und bzw. oder mit einem Sauerstoff enthaltenden Gas, bei dem zum Umsetzen von Calciumhydroxid zu Calciumcarbonat ein $CO_2$-haltiges Gas in die im Belebungssystem vorhandene Flüssigkeit eingeleitet wird.

Calcium enthaltende, organisch beastete Abwässer fallen insbesondere bei der Zuckerherstellung an. Von der Zuckerindustrie werden neuerdings zur Reinigung solcher Abwässer Belebtschlammverfahren entweder anstelle oder in Verbindung mit der Verwendung von Stapelteichen und Oxidationsteichen eingesetzt. So ist beispielsweise ein Abwasserreinigungsverfahren bekannt, bei dem das in der Zuckerfabrik anfallende Schwemm- und Waschwasser im Kreislauf über ein Absetzbecken geführt und das vom Absetzbecken kommende Schlammtransportwasser zunächst einem Auflandebecken und einem Anaerobbecken und danach einem Fermenter mit nachgeschaltetem Nachklärbecken zugeleitet wird. Im Nachlärbecken abgesetzter Schlamm wird in den Fermenter zurücktransportiert, während aus dem Nachlärbecken abgezogenes gereinigtes Wasser in das Absetzbecken des Schwemm- und Waschwasserkreises zurück- oder einem Vorfluter zugeleitet werden kann. Der Fermenter kann dabei mit Luft oder zumindest mit Sauerstoff angereicherter Luft betrieben werden (siehe Sonderdruck aus der Zeitschrift "Zucker", 28. Jahrgang, Heft 10, Seite 527 bis 534, 1975).

Wie sich gezeigt hat, verläuft der Betrieb solcher Kläranlagen nicht immer reibungslos. Häufig treten unkontrollierte Entartungen des Belebtschlammes auf, die erhebliche Störungen der Abbauleistung zur Folge haben und die auf ein unausgewogenes Nährstoffangebot, insbesondere bei Über- oder Unterbelastung der Anlagen zurückzuführen sind. Solche als Blähschlamm bezeichneten Entartungen können beispielsweise lange Bakterienfäden sein, die nur eine geringe Sinkgeschwindigkeit besitzen. Beim Auftreten eines solchen Blähschlamms erfolgt im Nachlärbecken nur eine sehr langsame Auftrennung in den Belebtschlamm, der in die Belebungsanlage zurückgenommen wird, und in den Klarlauf, der in den Vorfluter abgeleitet wird.

Außerdem kann auch eine Verminderung des Bakterienwachstums im Belebtschlammsystem und damit eine geringe Abbauleistung dadurch bedingt sein, daß das im Absetzbecken des Schwemm- und Waschwasserkreislaufs anfallende Abwasser aufgrund der üblicherweise mehr oder minder hohen Zugaben von Calciumhydroxid ($Ca(OH)_2$) in den Schwemm- und Wasserkreislauf zur Vermeidung eines in diesem Kreislauf unerwünschten Bakterienwachstums stark alkalisch ist, wobei pH-Werte bis zu 12 erreicht werden können.

Aus der französischen Offenlegungsschrift 2 294 986 ist darüber hinaus ein Verfahren zur chemischen und biologischen Reinigung von Abwasser aus Industrie und Landwirtschaft bekannt, bei dem das zu behandelnde Abwasser zunächst unter Sauerstoffzufuhr mit Kalk zur Erzeugung eines pH-Wertes höher 9 vermischt, darauf die Mischung mit $CO_2$ gesättigt, der sich bildende Niederschlag mit Hilfe eines Koagulationsmittels ausgefällt und der Niederschlag von der Flüssigkeit abgetrennt wird. Anschließend wird das so behandelte Abwasser in ein Absetzbecken geleitet und der Klarwasserablauf biologisch weitergereinigt. Bei diesem Verfahren wird bereits das im Abwasser gelöste Calciumhydroxid durch Zufuhr eines $CO_2$-haltigen Gases in einem unlöslichen Niederschlag in Form von Calciumcarbonat übergeführt, doch fehlen Angaben, wie eine möglichst hohe Abbauleistung des Reinigungsverfahrens zu verwirklichen ist.

Der Erfindung liegt die Aufgabe zugrunde, ein Verfahren zur Reinigung Calcium enthaltenden Abwassers, insbesondere aus Zuckerfabriken, der eingangs genannten Art zu entwickeln, mit dem auf einfache Weise trotz der unter Umständen auftretenden Entartungen des Belebtschlamms und trotz des hohen pH-Wertes im Abwasser eine möglichst hohe Abbauleistung erzielt werden kann.

Diese Aufgabe wird erfindungsgemäß dadurch gelöst, daß die $CO_2$-Einleitung in dem Maß durchgeführt wird, daß der pH-Wert im Belebungssystem zwischen 6 und 8 eingestellt und die Konzentration an Belebtschlammtrockensubstanz über 8 kg/m$^3$ und der Anteil der organischen Substanz darin, definiert als Glühverlust auf 30 bis 70%, vorzugsweise auf 40 bis 60%, gehalten wird.

Mit Hilfe dieser Maßnahmen kann auf einfache und überraschend wirkungsvolle Weise eine hohe Abbauleistung des Reinigungsverfahrens verwirklicht werden. Mit der Einstellung des pH-Wertes im Belebungssystem zwischen 6 und 8 wird erreicht, daß bei nur gering saurem oder nur gering alkalischem Abwasser das Bakterienwachstum am günstigsten ist. Je mehr Calciumhydroxid dabei durch die Zufuhr des $CO_2$-haltigen Gases in Calciumcarbonat übergeführt wird, desto geringer wird der pH-Wert des Abwassers und stellt sich auf den gewünschten Bereich ein, in dem das Bakterienwachstum verbessert und die Abbauleistung entsprechend erhöht wird.

Außerdem wird mit der Einstellung der Konzentration an Belebtschlammtrockensubstanz im Abwasser über 8 kg/m$^3$ und des Anteils der organischen Substanz (definiert als Glühverlust) darin auf 30 bis 70%, vorzugsweise auf 40 bis 60%, erreicht, daß die Ausbildung und/oder die Auswirkungen des Blähschlamms weitgehend unterbunden und die Sinkgeschwindigkeit auch von fadenförmigen Bakterien in der Nachklärzone erhöht werden, so daß der vorhandene Belebtschlamm schneller in die Belebtzone zurückgeführt werden kann und dadurch letztlich mehr organische Substanz (=Bakterienmasse) zur Verfügung steht. Eine Erhöhung der Abbauleistung ist die Folge. Dabei wird der Belebtschlamm mit Hilfe des durch das Einleiten eines $CO_2$-haltigen Gases ausgefällten Calciumcarbonats beschwert, was zu einer Erhöhung der Konzentration der Belebtschlammtrockensubstanz führt, die allgemein den Gewichtsanteil ungelöster Stoffe eines Feststoffwassergemisches angibt.

Mit Vorteil wird das erfindungsgemäße Verfahren so durchgeführt, daß durch die Einleitung des $CO_2$-haltigen Gases der pH-Wert im Belebungssystem auf einen Wert zwischen 6,5 und 7,5 eingestellt wird. Zur Einstellung dieser pH-Werte und der beiden übrigen Parameter ist es lediglich erforderlich, die Menge des eingeleiteten $CO_2$-haltigen Gases in Abhängigkeit der zum Beispiel im Ablauf des Abwassers ermittelten Meßwerte für den pH-Wert und für die übrigen Parameter zu regeln.

Wie sich gezeigt hat, lassen sich mit den vorstehend angegebenen Werten gute Abbauleistungen erzielen. Ein Zahlenbeispiel soll diese Zusammenhänge verdeutlichen: Abwasser aus dem Schwemm- und Waschwasserkreislauf einer Zuckerfabrik wurde aus dem Ablauf des mechanischen Absetzbeckens entnommen und einer halbtechnischen biologischen Anlage zugeleitet. Der $BSB_5$ des Zulaufs betrug 12000 mg/l, der CSB 17000 mg/l, der pH-Wert 10—12 und der Ca-Gehalt 3000 mg/l. Das Belebungsbecken der Anlage war zu Beginn mit Belebtschlamm einer kommunalen Kläranlage gefüllt worden, der durch eine Trockensubstanzkonzentration von 4 mg/m$^3$, einen Glühverlust von 80% und einen Schlammindex von 100 ml/g gekennzeichnet war. Im Belebungsbecken wurde ein Gas eingetragen, das 60—70% $O_2$ und 30—40% $CO_2$ enthielt. Hierdurch stellte sich im Becken ein pH-Wert von 6,5—7 ein. Die Trockensubstanzkonzentration nahm im Verlauf kurzer Zeit stark zu und erreichte Werte von 20 bis 40 kg/m$^3$ mit einem Glühverlust von 40—50% und einem Schlammindex von 20—50 ml/g. Bei einer $BSB_5$-Raumbelastung von 5—10 kg/m$^3$. d und einer entsprechenden nominellen Belüftungszeit von 30—60 Stunden wurden im Ablauf des Nachklärbeckens $BSB_5$-Werte von 150—300 mg/l und CSB-Werte von 600—1200 mg/l gemessen. Der Ca-Gehalt des Ablaufs lag bei 600 mg/l, hatte also um 2400 mg/l abgenommen, was einer ausgefällten Menge von 6000 mg/l $CaCO_3$ entspricht. Bei Bestimmung des Glühverlustes geht das $CaCO_3$ praktisch völlig in 3350 mg/lCaO über. Aus 12000 mg/l $BSB_5$ entstehen etwa 2500 mg/l überschußschlamm mit einem organischen Anteil von ca. 70%. Die anschließende Tabelle zeigt, daß auf diese Weise ein Schlamm mit einem organischen Anteil von ca. 21% und einem Glühverlust (zuvor definiert als organische Substanz) von ca. 50% entstanden ist. Der anorganische Anteil bewirkt die guten Flockungs- und Absetzeigenschaften.

**0 000 861**

| Bestandteil | Schlamm vor dem Glühlen | Bestandteil | Rückstand nach dem Glühlen |
|---|---|---|---|
| CaCO₃ | 6.000 mg/l | Ca O | 3 350 mg/l |
| Belebtschlamm organ. | 1.750 mg/l | Bel.-Schl. org. | 0 |
| Belebtschlamm anorganisch | 750 mg/l | Bel.-Schl. anorg. | 750 mg/l |
| gesamt | 8.500 mg/l | gesamt | 4.100 mg/l |

organischer Anteil    $1750/8\,500 = 21\,\%$

Glühverlust    $\dfrac{8500 - 4100}{8500} = 50\,\%$

## Patentansprüche

1. Verfahren zur Reinigung Calcium enthaltenden organisch belasteten Abwassers mittels eines Belebtschlammverfahrens unter Belüften mit nahezu reinem Sauerstoff und bzw. oder mit einem sauerstoffenthaltenden Gas, bei dem zum Umsetzen von Calciumhydroxid zu Calciumcarbonat ein $CO_2$-haltiges Gas in die im Belebungssystem vorhandene Flüssigkeit eingeleitet wird, dadurch gekennzeichnet, daß die $CO_2$-Einleitung in dem Maß durchgeführt wird, daß der pH-Wert im Belebungssystem zwischen 6 und 8 eingestellt und die Konzentration an Belebtschlammtrockensubstanz über 8 kg/m³ und der Anteil der organischen Substanz darin, definiert als Glühverlust, auf 30 bis 70%, vorzugsweise auf 40 bis 60%, gehalten wird.

2. Verfahren nach Anspruch 1, dadurch gekennzeichnet, daß die Einstellung des pH-Wertes auf einen Wert zwischen 6,5 und 7,5 durchgeführt wird.

## Claims

1. Process for the purification of calcium-containing waste water which is charged with organic matter by means of an activated sludge process using aeration with substantially pure oxygen and/or with an oxygen-containing gas, wherein in order to convert calcium hydroxide into calcium carbonate, a $CO_2$-containing gas is introduced into the liquid present in the activation system, characterised in that the introduction of $CO_2$ is carried out to such an extent that the pH-value in the activation system is adjusted to between 6 and 8, and the solid matter concentration of the activated sludge is maintained at above 8 kg/m³ and the content of the organic material therein, defined as the loss of ignition, at 30 to 70%, preferably 40 to 60%.

2. Process as claimed in Claim 1, characterised in that the pH-value is adjusted to a value of between 6.5 and 7.5.

## Revendications

1. Procédé de purification d'eaux résiduaires renfermant du calcium et chargées d'impuretés organiques, par mise en oeuvre d'un procédé utilisant de la boue activée et utilisant un barbotage d'oxygène sensiblement pur ou de gaz renfermant de l'oxygène, dans lequel un gaz renfermant du $CO_2$ est introduit dans le liquide présent dans le système d'activation en vue de la transformation, part transposition, de l'hydroxyde de calcium en carbonate de calcium, caractérisé en ce que le $CO_2$ est introduit dans une proportion telle que le pH du système d'activation soit ajusté à une valeur comprise entre 6 et 8, que la concentration de substance sèche de la boue activée soit maintenue à une valeur supérieure à 8 kg/m³, et que la proportion des substances organiques présentes, définie en perte au feu, soit maintenue à une valeur comprise entre 30 et 70%, de préférence entre 40 et 60%.

2. Procédé selon la revendication 1, caractérisé en ce que le pH est réglé à une valeur comprise entre 6.5 et 7,5.

4